(19) **Europäisches Patentamt**
**European Patent Office**
**Office européen des brevets**

(11) **EP 4 761 142 A1**

(12) **EUROPEAN PATENT APPLICATION**
published in accordance with Art. 153(4) EPC

(43) Date of publication:
**17.06.2026  Bulletin 2026/25**

(21) Application number: **24864342.1**

(22) Date of filing: **09.08.2024**

(51) International Patent Classification (IPC):
**H04B 10/2525** $^{(2013.01)}$

(52) Cooperative Patent Classification (CPC):
**H04B 10/2525; H04J 14/02**

(86) International application number:
**PCT/CN2024/111160**

(87) International publication number:
**WO 2025/055619 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023  CN 202311178022**

(71) Applicant: **HUAWEI TECHNOLOGIES CO., LTD.
Shenzhen 518129 (CN)**

(72) Inventors:
• **WU, Yangbo**
  **Shenzhen, Guangdong 518129 (CN)**
• **YANG, Zhao**
  **Shenzhen, Guangdong 518129 (CN)**
• **LIANG, Ning**
  **Shenzhen, Guangdong 518129 (CN)**
• **REN, Yang**
  **Shenzhen, Guangdong 518129 (CN)**
• **TU, Zhengrui**
  **Shenzhen, Guangdong 518129 (CN)**
• **FENG, Jia**
  **Shenzhen, Guangdong 518129 (CN)**
• **LI, Xuemeng**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION DEVICE, BASE STATION AND COMMUNICATION SYSTEM**

(57)    This application provides a communication device, a base station, and a communication system. The communication device includes a power divider, a coupler group, and a multiplexer that are sequentially connected. The power divider is connected to the coupler group via at least two first paths. The power divider may divide a light beam into at least two split light beams, each split light beam is transmitted to the coupler group via one first path, and a phase difference and a time difference exist in transmission of any two split light beams in corresponding first paths. The coupler group performs coupling interference on the received at least two split light beams, and outputs at least two coupled split light beams, where each coupled split light beam passes through one second path and then enters the multiplexer, and a time difference exists in transmission of any two coupled split light beams in corresponding second paths. The multiplexer may perform orthogonal beam combining on the received coupled split light beams. The communication device may perform dispersion compensation on the light beam to suppress pulse broadening, thereby reducing a bit error rate of optical signal transmission and reducing a power loss of an optical signal.

FIG. 3

EP 4 761 142 A1

**Description**

CROSS-REFERENCE TO RELATED APPLICATIONS

This application claims priority to Chinese Patent Application No. 202311178022.2, filed with the China National Intellectual Property Administration on September 12, 2023 and entitled "COMMUNICATION DEVICE, BASE STATION, AND COMMUNICATION SYSTEM", which is incorporated herein by reference in its entirety.

TECHNICAL FIELD

This application relates to the field of communication technologies, and in particular, to a communication device, a base station, and a communication system.

BACKGROUND

An optical fiber communication (optical fiber communication) technology has emerged from optical communication, has become one of major pillars of modem communication, and plays a significant part in a modem telecommunications network. In recent years, as an emerging technology, the optical fiber communication has developed at an unprecedentedly fast pace and is widely applied. This is rare in the history of communication. The optical fiber communication is also an important symbol of the world's new technological revolution and a primary tool for transmission of various types of information in a future information society. An advantage of the optical fiber communication is that light beams of dozens of wavelengths can be transmitted simultaneously in one optical fiber. Because light beams of different wavelengths have different transmission speeds in a same optical fiber, dispersion occurs. Occurrence of the dispersion causes pulse broadening. The pulse broadening may cause optical pulses to overlap, resulting in intersymbol crosstalk and then leading to a bit error. However, in a current wireless fronthaul scenario, a transmission distance of a light beam is long. Consequently, transmission of an optical signal is more affected by the dispersion, resulting in severe power fading of the optical signal. Therefore, how to perform dispersion compensation on the light beam has become a difficult problem that is currently to be urgently resolved by a person skilled in the art.

SUMMARY

This application provides a communication device, a base station, and a communication system, to perform dispersion compensation on a light beam and suppress pulse broadening of the light beam, thereby reducing a power loss of optical signal transmission.

According to a first aspect, this application provides a communication device. The communication device may include a power divider, a coupler group, and a multiplexer that are sequentially connected, the power divider is connected to a coupler group via at least two first paths, and the coupler group is connected to the multiplexer via at least two second paths. The power divider may be configured to divide a light beam into at least two split light beams, where the at least two split light beams may enter the at least two first paths in one-to-one correspondence. In this case, each split light beam may be transmitted along a direction of a corresponding first path from the power divider to the coupler group, and a phase difference and a time difference exist in transmission of any two split light beams in corresponding first paths. The coupler group may be configured to perform coupling interference on the received at least two split light beams, and output at least two coupled split light beams, where the at least two coupled split light beams may enter the at least two second paths in one-to-one correspondence. In this case, each coupled split light beam may be transmitted along a direction of a corresponding second path from the coupler group to the multiplexer, and a time difference exists in transmission of any two coupled split light beams in corresponding second paths. The multiplexer may be configured to perform orthogonal beam combining on the at least two coupled split light beams. In the communication device provided in this application, effective dispersion compensation may be performed on the light beam, to suppress pulse broadening, reduce a bit error rate of an optical signal, and reduce a power loss of optical signal transmission.

In a possible implementation of this application, the power divider may be connected to the coupler group via N first paths, where N is an integer greater than or equal to 2. In this way, each first path in at least N-1 first paths may be caused to include a phase shifter and a time delay unit that are connected in series. Therefore, the phase shifter and the time delay unit of each of the at least N-1 first paths may be configured, to cause a phase difference and a time difference to exist in transmission of any two split light beams divided by the power divider via corresponding first paths.

In a possible implementation of this application, the time delay unit of each first path may be, but is not limited to, a spiral waveguide or an optical fiber of a specified length, provided that a purpose of adjusting transmission time of the split light beam on the first path can be achieved. In addition, the phase shifter of each first path may be, but is not limited to, a thermal phase shifter or an electrical phase shifter, provided that a purpose of adjusting a phase shift in transmission of the split light beam on the first path can be achieved.

In a possible implementation of this application, the multiplexer may be connected to the coupler group via M second paths, where M is an integer greater than or equal to 2. In this way, each second path in at least M-1 second paths may be caused to include a time delay unit. Therefore, the time delay unit of each of the at least M-1 second paths may be configured, to cause a time difference to exist in transmission of any two coupled split light beams, via the corresponding second paths, obtained through coupling interference performed by the coupler group.

In a possible implementation of this application, the time delay unit of each second path may be, but is not limited to, a spiral waveguide or an optical fiber of a specified length, provided that a purpose of adjusting transmission time of the coupled split light beam on the second path can be achieved.

In a possible implementation of this application, during specific disposition, the coupler group may include at least two couplers that are sequentially connected via a third path, and two adjacent couplers in the at least two couplers are connected via at least two third paths. At least two intermediate coupled split light beams output by a former coupler of the two adjacent couplers in the at least two couplers may enter the at least two third paths in one-to-one correspondence, and a phase difference and a time difference exist in transmission of any two intermediate coupled split light beams in corresponding third paths. In this way, the at least two split light beams that enter the coupler group may sequentially pass through the couplers that are connected via the third path, undergo the coupling interference, and then the coupler group outputs the at least two coupled split light beams to the multiplexer.

In a possible implementation of this application, the two adjacent couplers in the at least two couplers are connected via X third paths, where X is an integer greater than or equal to 2. In this case, each third path in at least X-1 third paths may include a phase shifter and a time delay unit that are connected in series. Therefore, the phase shifter and the time delay unit of each of the at least X-1 third paths may be configured, to cause a phase difference and a time difference to exist in transmission of any two intermediate coupled split light beams, via corresponding third paths, obtained through coupling interference performed by a former coupler.

In a possible implementation of this application, the time delay unit of each third path may be, but is not limited to, a spiral waveguide or an optical fiber of a specified length, provided that a purpose of adjusting transmission time of the split light beam on the third path can be achieved. In addition, the phase shifter of each third path may be, but is not limited to, a thermal phase shifter or an electrical phase shifter, provided that a purpose of adjusting a phase shift in transmission of the split light beam on the third path can be achieved.

In a possible implementation of this application, the multiplexer may be, but is not limited to, a mode multiplexer, a polarization multiplexer, or the like, provided that a function of performing the orthogonal beam combining on at least two coupled split light beams that have a time difference can be implemented.

In a possible implementation of this application, the coupler may be, but is not limited to, a multimode interferometer coupler or a directional coupler, provided that a function of performing coupling interference on at least two split light beams that have a phase difference and a time difference can be implemented.

In a possible implementation of this application, the communication device may further include a detector. The detector may be configured to receive a light beam obtained through orthogonal beam combining performed by the multiplexer, and the detector is configured to restore a signal that is modulated onto the light beam. In this way, the communication device may be configured to perform dispersion compensation on the light beam that enters the communication device, to reduce a bit error rate of an optical signal, and reduce a power loss of optical signal transmission.

In addition, the communication device further includes an optical transmit port and a power divider, the power divider is configured to divide a light beam that is modulated by the communication device into at least two split light beams, and the optical transmit port is configured to transmit, to outside of the communication device, the light beam obtained through orthogonal beam combining performed by the multiplexer. In this case, the communication device provided in this application may be further configured to perform dispersion compensation on a light beam transmitted by the communication device, to reduce the bit error rate of the optical signal and reduce the power loss of the optical signal transmission.

In a possible implementation of this application, the power divider may be directly or indirectly connected to the coupler group, and the coupler group may be directly or indirectly connected to the multiplexer. This is not specifically limited in this application. For example, the power divider may be directly connected to the coupler group via the at least two first paths, and the coupler group may be directly connected to the multiplexer via the at least two third paths. In addition, the communication device may further include at least one optical transmission system, and each optical transmission system includes at least one optical transmission medium. In this case, the at least one optical transmission system may be connected in series between the power divider and the coupler group, to implement an indirect connection between the power divider and the coupler group. Alternatively, the at least one optical transmission system may be connected in series between the coupler group and the multiplexer, to implement an indirect connection between the coupler group and the multiplexer.

In addition, when the communication device includes at least two optical transmission systems, at least one optical transmission system may be further connected in series between the power divider and the coupler group, and at least one optical transmission system is connected in series between the coupler group and the multiplexer, to implement an indirect connection between the power divider and the coupler group, and an indirect connection between the coupler group and the multiplexer.

According to a second aspect, this application further provides a base station, where the base station includes a baseband unit, a remote radio unit, and the communication device according to the first aspect, and the baseband unit has a signal connection to the remote radio unit via the communication device. In this way, the communication device may perform dispersion compensation on a light beam of which transmission is performed between the baseband unit and the remote radio unit, to suppress pulse broadening, reduce a bit error rate, and reduce a power loss of optical signal transmission.

In addition, the base station may further include an active antenna unit, and the baseband unit has a signal connection to the active antenna unit via the communication device. In this way, the communication device may perform dispersion compensation on a light beam of which transmission is performed between the baseband unit and the active antenna unit, to suppress pulse broadening, reduce a bit error rate, and reduce a power loss of optical signal transmission.

According to a third aspect, this application further provides a communication system, where the communication system includes the base station according to the second aspect, and the base station may be configured to communicatively connected to a terminal device. A bit error rate and a retransmission probability of a communication signal between the base station and the terminal device in the communication system are low, and a signal transmission delay can be effectively reduced.

BRIEF DESCRIPTION OF DRAWINGS

FIG. 1 is a diagram of a system architecture of a communication system according to an embodiment of this application;

FIG. 2 is a diagram of a structure of a base station according to an embodiment of this application;

FIG. 3 is a brief diagram of a structure of a communication device according to an embodiment of this application;

FIG. 4 is a diagram of a structure of a time delay unit according to an embodiment of this application;

FIG. 5a is a dispersion amplitude-frequency response curve of a light beam that has not entered a communication device according to an embodiment of this application;

FIG. 5b is a dispersion time-domain impulse response curve of a light beam that has not entered a communication device according to an embodiment of this application;

FIG. 6a and FIG. 6b are time-domain impulse response curves corresponding to two coupled split light beams according to an embodiment of this application;

FIG. 7a is a dispersion amplitude-frequency response curve of a light beam obtained through dispersion compensation performed by a communication device according to an embodiment of this application;

FIG. 7b is a dispersion time-domain impulse response curve of a light beam obtained through dispersion compensation performed by a communication device according to an embodiment of this application;

FIG. 8 is a link simulation diagram of a communication device according to an embodiment of this application;

FIG. 9 is another link simulation diagram of a communication device according to an embodiment of this application;

FIG. 10 is a diagram of another structure of a communication device according to an embodiment of this application;

FIG. 11 is a diagram of another structure of a communication device according to an embodiment of this application;

FIG. 12 is a diagram of another structure of a communication device according to an embodiment of this application;

FIG. 13 is a brief diagram of a structure of a coupler group according to an embodiment of this application; and

FIG. 14 is a diagram of a structure of an optical module according to an embodiment of this application.

Reference Numerals:

01: antenna system; 02: RRU; 03: BBU; 04: AAU; 05: optical transmission medium; 06: communication device;
1: power divider; 2: coupler group; 201, 201a, 201b: coupler; 3: multiplexer; 4, 4a, 4b: first path;
401: phase shifter; 402: time delay unit; 5, 5a, 5b: second path; 501: time delay unit; 6: third path; 601: phase shifter;
602: time delay unit; 7: optical transmission system; 8: housing.

DESCRIPTION OF EMBODIMENTS

To make objectives, technical solutions, and advantages of this application clearer, the following further describes this application in detail with reference to the accompanying drawings. However, example implementations may be implemented in a plurality of forms, and are not to be construed as being limited to implementations described herein. Identical reference numerals in the accompanying drawings denote identical or similar structures. Therefore, repeated description thereof is omitted. Expressions of positions and directions in embodiments of this application are described by using the accompanying drawings as examples. However, changes may also be made as required, and all the changes fall within the protection scope of this application. The accompanying drawings in embodiments of this application are merely used to illustrate relative position relationships and do not represent an actual scale.

It should be noted that specific details are set forth in the following descriptions for ease of understanding this application. However, this application can be implemented in a plurality of manners different from those described herein, and a person skilled in the art can perform similar promotion without departing from the connotation of this application. Therefore, this application is not limited to the following disclosed specific embodiments.

To facilitate understanding of a communication device provided in this application, an application scenario of the communication device is first described.

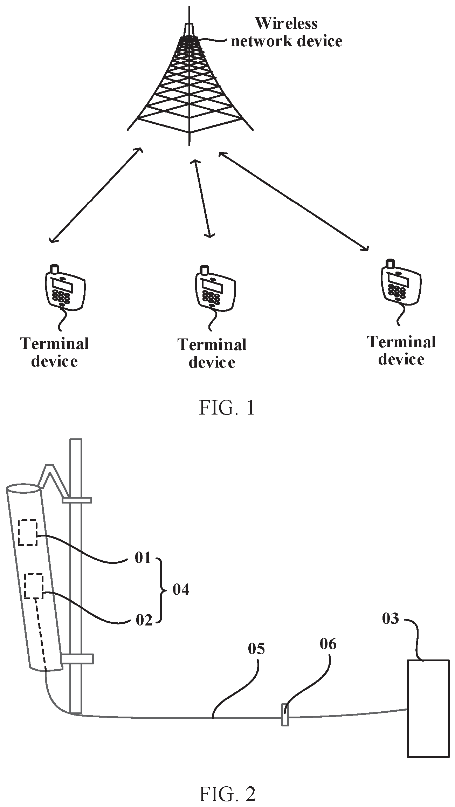

FIG. 1 is a diagram of a system architecture of a communication system according to this application. In the system architecture shown in FIG. 1, the communication system may include a wireless network device, and the wireless network device may be, for example, a base station. The base station may be configured to communicatively connected to a terminal device, to implement wireless communication between the base station and the terminal device. For example, the terminal device may be a smartphone (smartphone), a personal digital assistant (personal digital assistant, PDA) computer, a notebook computer, a tablet computer, or a wearable device.

With a development of 5G wireless communication technologies, a base station architecture evolves from a distributed radio access network (distributed radio access network, DRAN) to a centralized radio access network (centralized radio access network, CRAN). FIG. 2 is a diagram of a structure of a base station according to an embodiment of this application. For example, the base station is used in a CRAN scenario. The base station may include an antenna system 01, a remote radio unit (remote radio unit, RRU 02), and a baseband unit (baseband unit, BBU 03). The antenna system 01 may be configured to radiate an electrical signal outward or receive an external electrical signal. The RRU 02 may be configured to perform frequency selection, amplification, and down-conversion processing on an electrical signal received by the antenna system 01, convert the electrical signal into an intermediate frequency signal or a baseband signal, and send the intermediate frequency signal or the baseband signal to the BBU 03. Alternatively, the RRU 02 is configured to perform up-conversion and amplification processing on a baseband signal or an intermediate frequency signal, convert the baseband signal or the intermediate frequency signal into an electromagnetic wave via the antenna system 01, and send the electromagnetic wave.

In a possible base station design, the RRU 02 may further be used together with an antenna unit in the antenna system 01 to form an active antenna unit (active antenna unit, AAU 04), to implement spatial beamforming and complete receiving and sending of a radio frequency signal.

In the base station shown in FIG. 2, the RRU 02 and the antenna system 01 may be integrated into the AAU 04, and the BBU 03 is disposed at a remote location. In some other possible embodiments, both the RRU 02 and the BBU 03 may be disposed at a remote location relative to the antenna system 01. Regardless of which disposition form is used, the RRU 02 may be connected to the BBU 03 via an optical transmission medium 05 like an optical fiber or a waveguide, and the AAU 04 may be connected to the BBU 03 via the optical transmission medium 05 like the optical fiber or the waveguide, to implement optical signal interconnection between the RRU 02 and the BBU 03 and between the AAU 04 and the BBU 03.

Currently, in the CRAN scenario, an optical transmission distance between the RRU 02 and the BBU 03 and an optical transmission distance between the BBU 03 and the AAU 04 may reach 10 km. During long-distance transmission, a high-speed light beam suffers from severe dispersion, leading to pulse broadening. The pulse broadening causes distortion of an optical signal, resulting in severe power fading of the optical signal.

In view of this, a communication device provided in this embodiment of this application divides a light beam into at least two split light beams via a power divider. A phase difference and a time difference exist when any two split light beams are transmitted from the power divider to a coupler group. The coupler group is configured to perform coupling interference on a plurality of split light beams, and output at least two coupled split light beams. A time difference exists when any two coupled split light beams are transmitted from the coupler group to a multiplexer. Finally, the at least two coupled split light beams are orthogonally combined by using the multiplexer. When used in the base station, the communication device may be configured to perform dispersion compensation on a light beam transmitted in the base station, to suppress the pulse broadening and reduce a power loss of the optical signal. The following specifically describes the communication device provided in embodiments of this application with reference to the accompanying drawings.

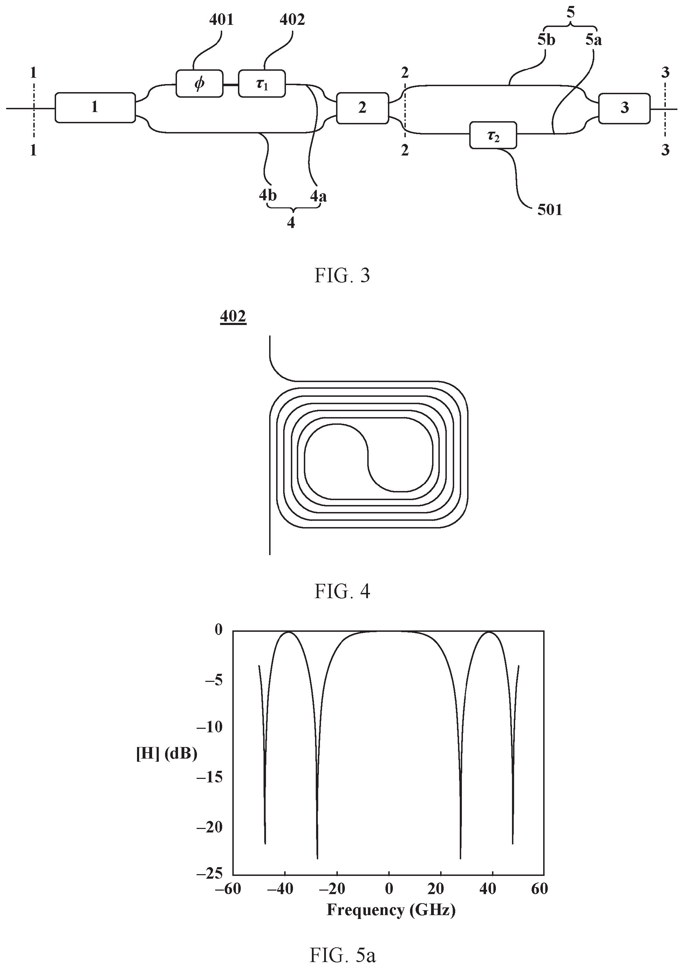

FIG. 3 is a brief diagram of a structure of a communication device according to an embodiment of this application. In this embodiment of this application, the communication device may include a power divider 1, a coupler group 2, and a multiplexer 3, and the power divider 1, the coupler group 2, and the multiplexer 3 are sequentially connected, to form a linearly connected optical domain equalization system. A light beam may enter the optical domain equalization system via the power divider 1, and the power divider 1 may be configured to divide the light beam into at least two split light beams.

In this application, a specific power ratio for the power divider 1 to divide the light beam is not limited, and may be specifically designed based on a specific application scenario. For example, in the communication device shown in FIG. 3, the power divider 1 may be configured to divide the light beam into two split light beams. When dividing the light beam, the power divider 1 may divide the light beam into two split light beams with equal power based on an equal power ratio of 1:1.

Still refer to FIG. 3. The power divider 1 is connected to the coupler group 2 via two first paths 4, and the two first paths 4 are disposed in parallel. In this case, the two split light beams obtained by the power divider 1 through division may enter the two first paths 4 in one-to-one correspondence.

In the communication device provided in this embodiment of this application, during transmission of each split light beam via a corresponding first path 4, a phase difference and a time difference exist in transmission of any two split light beams in corresponding first paths 4. During specific implementation, a structure of the communication device shown in FIG. 3 is still used as an example. When the power divider 1 is connected to the coupler group 2 via the two first paths 4, for ease of description, the two first paths 4 may be defined as a first path 4a and a first path 4b respectively. In this way, the first path 4a may be caused to include a phase shifter 401 and a time delay unit 402 that are connected in series, and neither the phase shifter 401 nor the time delay unit 402 may be disposed on the first path 4b. In this way, the phase shifter 401 and the time delay unit 402 on the first path 4a may be adjusted, to adjust phase shifts and delays of the two split light beams during transmission via the corresponding first paths 4. In this setting manner, the structure of the communication device can be effectively simplified, to reduce costs of the communication device.

However, in some possible embodiments of this application, a phase shifter and a time delay unit may alternatively be disposed in each first path 4, so that a phase shift and a delay of each split light beam during transmission via the corresponding first path 4 can be adjusted by separately adjusting the phase shifter and the time delay unit on each first path 4, thereby effectively improving flexibility of adjusting the phase shift and the delay of each split light beam during transmission via the corresponding first path 4. In this way, the phase difference and the time difference of any two split light beams during transmission via the corresponding first paths 4 can be flexibly adjusted.

In this embodiment of this application, a specific type of the phase shifter 401 disposed on the first path 4a is not limited, and the phase shifter 401 may be, for example, a thermal phase shifter or an electrical phase shifter. In addition, the time delay unit 402 disposed on the first path 4a may be, for example, a spiral waveguide shown in FIG. 4, or may be an optical fiber, provided that effect of increasing transmission time of the light beam from the power divider 1 to the coupler group 2 can be achieved.

Still refer to FIG. 3. The two split light beams obtained by the power divider 1 through division are transmitted to the coupler group 2 via the first paths 4 respectively corresponding to the two split light beams. The coupler group 2 may be configured to: perform interference coupling on the two split light beams, and output two coupled split light beams. In addition, in the communication device shown in FIG. 3, the coupler group 2 is connected to the multiplexer 3 via two second paths 5. In this way, the two coupled split light beams may enter the two second paths 5 in one-to-one correspondence.

In the communication device provided in this embodiment of this application, during transmission of each coupled split light beam via a corresponding second path 5, a time difference exists in transmission of any two coupled split light beams in corresponding second paths 5. During specific implementation, for ease of description, the two second paths 5 may be defined as a second path 5a and a second path 5b respectively. As shown in FIG. 3, the second path 5a includes a time delay unit 501, and a time delay unit 501 is not disposed on the second path 5b. In this way, the time delay unit 501 on the second path 5a may be adjusted, to adjust delays of the two coupled split light beams during transmission via the corresponding second paths 5. In this setting manner, the structure of the communication device can be effectively simplified, to reduce costs of the communication device.

It is to be noted that, in some other possible embodiments of this application, a time delay unit may be disposed in each second path 5, so that a delay of each coupled split light beam during transmission via the corresponding second path 5 can be adjusted by separately adjusting the time delay unit on each second path 5, thereby effectively improving flexibility of adjusting the delay of each coupled split light beam during transmission via the corresponding second path 5. In this way, the time difference of any two coupled split light beams during transmission via the corresponding second paths 5 can be flexibly adjusted.

In this embodiment of this application, a specific type of the time delay unit 501 disposed on the second path 5a is not limited, and the time delay unit 501 may be, for example, a thermal phase shifter or an electrical phase shifter. In addition, the time delay unit 501 disposed on the second path 5a may also be, for example, the spiral waveguide shown in FIG. 4, or may be an optical fiber, provided that effect of increasing transmission time of the light beam from the coupler group 2 to the multiplexer 3 can be achieved. In addition, the multiplexer 3 may be, but is not limited to, a mode multiplexer, a polarization multiplexer, or the like, provided that orthogonal beam combining can be performed on a plurality of light beams.

After a design principle of the communication device provided in this application is understood, the following analyzes a dispersion compensation effect of the communication device provided in this application on a light beam.

Because the optical domain equalization system is a linear system, the optical domain equalization system may be disposed at an optical receive port of the communication device, or may be disposed at an optical transmit port of the communication device. An example in which the optical domain equalization system is disposed at the optical receive port of the communication device is used. A photodetector may further be disposed at the optical receive port of the communication device, and the photodetector may be configured to restore a signal that is modulated onto the light beam.

It may be understood that, in this application, a dispersion compensation effect of the communication device provided in this application on the light beam may be described by comparing dispersion of an incident light beam that has not entered the optical domain equalization system with dispersion of a light beam that has passed through the optical domain equalization system.

First, after square-law detection is performed, via the photodetector, on the incident light beam that has not entered the optical domain equalization system, namely, a light beam corresponding to a node 1-1 in FIG. 3, amplitude-frequency responses of signals of different frequencies of the light beam may be expressed as:

$$I(t)|_\omega = \cos(\omega t)\cos(\frac{\omega^2 D \lambda^2 L}{4\pi c})$$

$\omega$ is a frequency of a signal of a different frequency, $\lambda$ is a wavelength of the incident light beam, $D$ is a dispersion coefficient, and $L$ is a transmission distance.

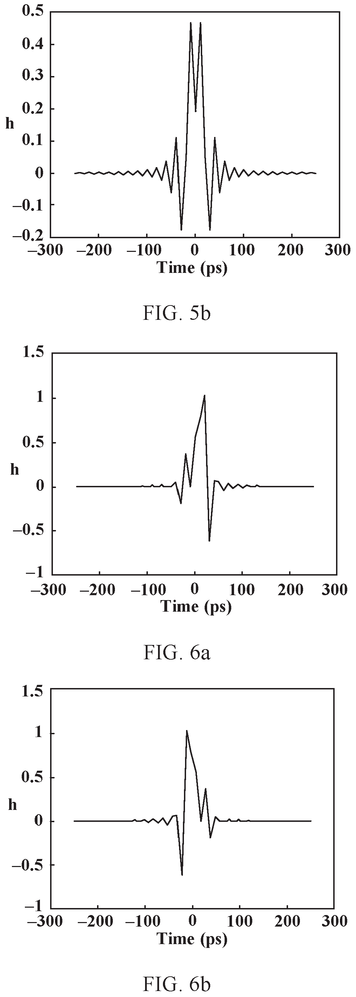

An example in which the wavelength of the incident light beam $\lambda$ = 1371 nm, the dispersion coefficient $D$ = 7 ps/nm/km, and the transmission distance $L$ = 15 km is used. A calculated dispersion amplitude-frequency response curve of the incident light beam is shown in FIG. 5a. It can be learned from FIG. 5a that an attenuation of a dispersion amplitude-frequency response of the incident light beam is the largest at 27 GHz. In addition, FIG. 5b is a dispersion time-domain impulse response curve of the incident light beam. It can be learned from FIG. 5b that pulse broadening, of the incident light beam, caused by dispersion is wide.

After entering the optical domain equalization system from the power divider 1, the incident light beam may be divided by the power divider 1 into two split light beams, and the two split light beams enter the first path 4a and the first path 4b in one-to-one correspondence and then enter the coupler group 2. In this case, one split light beam in the two split light beams obtained by the power divider 1 through division passes through the first path 4a with a phase shift of $\phi$=0 and a delay of $\tau_1$=10 ps, and the other split light beam in the two split light beams passes through the first path 4b with a phase shift of zero and a delay of zero. Therefore, a phase difference of the two split light beams during transmission via the corresponding first paths 4 is $\phi$, and a time difference thereof is $\tau_1$.

In addition, after the coupler group 2 performs interference coupling on the two split light beams, two coupled split light beams, namely, light beams corresponding to a node 2-2 in FIG. 3, are output. Amplitude-frequency responses of the two coupled split light beams may be respectively expressed as:

$$I_1(t)|_\omega = cos(\omega t)\,cos\left(\frac{\omega^2 D \lambda^2 L}{4\pi c}\right) + cos(\omega(t-\tau_1))\,cos\left(\frac{\omega^2 D \lambda^2 L}{4\pi c}\right)$$
$$+ cos(\omega t)\,cos\left(\frac{\omega^2 D \lambda^2 L}{4\pi c} - \phi + \frac{\pi}{2}\right) + cos(\omega(t-\tau_1))\,cos\left(\frac{\omega^2 D \lambda^2 L}{4\pi c} + \phi - \frac{\pi}{2}\right)$$

$$I_2(t)|_\omega = cos(\omega t)\,cos\left(\frac{\omega^2 D \lambda^2 L}{4\pi c}\right) + cos(\omega(t-\tau_1))\,cos\left(\frac{\omega^2 D \lambda^2 L}{4\pi c}\right)$$
$$+ cos(\omega t)\,cos\left(\frac{\omega^2 D \lambda^2 L}{4\pi c} - \phi - \frac{\pi}{2}\right) + cos(\omega(t-\tau_1))\,cos\left(\frac{\omega^2 D \lambda^2 L}{4\pi c} + \phi + \frac{\pi}{2}\right)$$

Time-domain impulse responses of the two coupled split light beams may be obtained through calculation by substituting values of the foregoing corresponding parameters into the foregoing formulas. FIG. 6a and FIG. 6b respectively show time-domain impulse response curves corresponding to the two coupled split light beams. FIG. 6a may be used to show a time-domain impulse response curve of a coupled split light beam that enters the second path 5a, and FIG. 6b may be used to show a time-domain impulse response curve of a coupled split light beam that enters the second path 5b. It can be learned through comparison that, a time point at which a peak of the time-domain impulse response curve shown in FIG. 6a appears is later than a time point at which a peak of the time-domain impulse response curve shown in FIG. 6b appears, and in this case, a time difference $\tau_2$ exists in transmission of the two coupled split light beams at the node 2-2. Based on this, a delay of the time delay unit 501 on the second path 5b may be set to $\tau_2$, and a delay of the second path 5a is zero. In this case, the two coupled split light beams pass through the second path 5a and the second path 5b respectively, enter the multiplexer 3, and undergo orthogonal beam combining by the multiplexer 3, to obtain a signal that is a signal corresponding to a node 3-3 in FIG. 3. The signal is input to the photodetector, and undergoes square-law detection, to obtain a signal whose amplitude-frequency response may be expressed as:

$$I(t)|_\omega = I_1(t)|_\omega + I_2(t - \tau_2)|_\omega$$

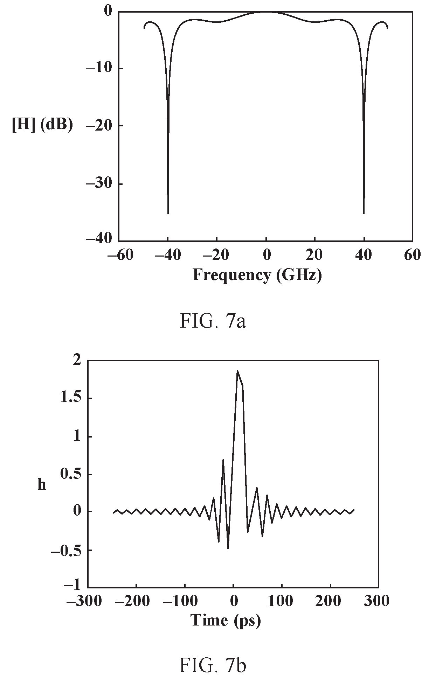

$\tau_2$=16 ps is used as an example. A calculated dispersion amplitude-frequency response curve of the light beam that has passed through the optical domain equalization system is shown in FIG. 7a. It can be learned from FIG. 7a that an attenuation of a dispersion amplitude-frequency response of the light beam that has passed through the optical domain equalization system is the largest at 40 GHz. In addition, FIG. 7b is a dispersion time-domain impulse response curve of the light beam that has passed through the optical domain equalization system. It can be learned through comparison between FIG. 5b and FIG. 7b that, after the incident light beam passes through the optical domain equalization system, pulse broadening caused by dispersion is effectively suppressed.

It can be learned from the foregoing analysis that, in the communication device provided in this embodiment of this application, before the incident light beam enters the photodetector, dispersion compensation may be performed on the incident light beam through the optical domain equalization system disposed at the optical receive port, to suppress pulse broadening. This helps reduce a power loss during optical signal transmission, and helps reduce a bit error rate of an optical signal, to improve receiving sensitivity of the communication device for the optical signal.

In the communication device provided in this embodiment of this application, the optical domain equalization system disposed at the optical receive port of the communication device may be configured to perform effective dispersion compensation on the incident light beam that enters the communication device. When disposed at the optical transmit port of the communication device, the optical domain equalization system may perform dispersion compensation on a light beam transmitted from the optical transmit port to outside of the communication device. During specific implementation, a light beam that is modulated by the communication device may enter the optical domain equalization system from the power divider 1, and the power divider 1 may be configured to divide the light beam that is modulated by the communication device into at least two split light beams based on a specified power ratio, the at least two split light beams enter the coupler group 2 via the corresponding first paths 4 and are then coupled to at least two coupled split light beams, and the at least two coupled split light beams enter the multiplexer 3 via the corresponding second paths 5. In this case, the optical transmit port may be configured to transmit, to the outside of the communication device, the light beam obtained through orthogonal beam combining performed by the multiplexer 3. It may be understood that, the light beam that is transmitted by the optical transmit port may be transmitted to another optical communication unit via an optical signal transmission medium, to implement optical signal interconnection between optical communication units.

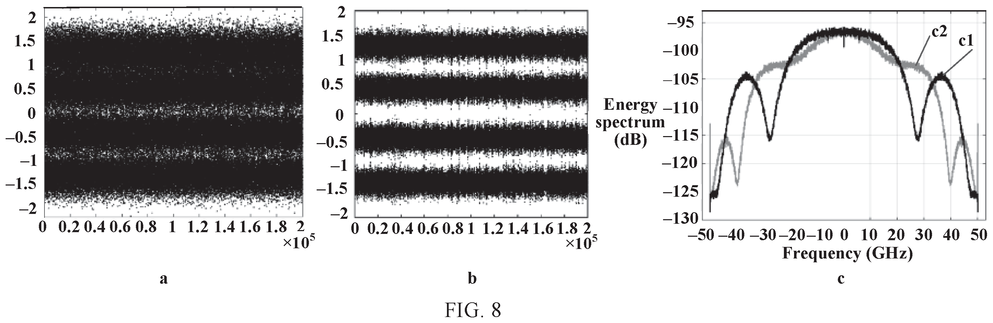

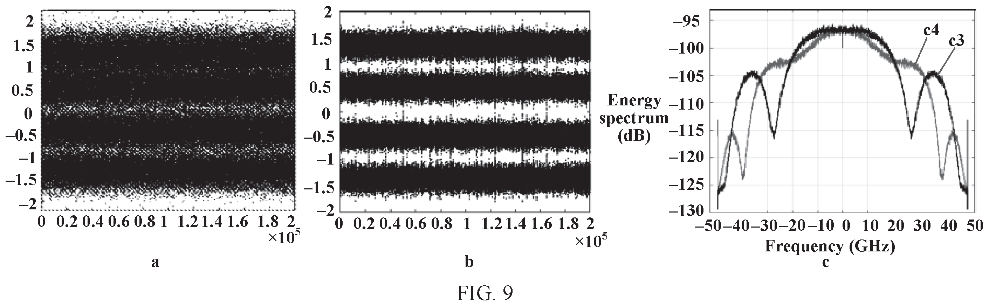

To compare effect of dispersion compensation performed by the communication device on an incident light beam when the optical domain equalization system is disposed on the optical receive port of the communication device and effect of dispersion compensation performed by the communication device on a transmitted light beam when the optical domain equalization system is disposed on the optical transmit port of the communication device, refer to FIG. 8 and FIG. 9. a in FIG. 8 is a level diagram of a light beam that enters the communication device from the optical receive port when no optical domain equalization system is disposed at the optical receive end of the communication device. b in FIG. 8 is a level diagram of a light beam that enters the communication device by going through the optical domain equalization system from the optical receive port, when the optical domain equalization system is disposed at the optical receive end of the communication device. It can be learned through comparison between a in FIG. 8 and b in FIG. 8 that, after the incident light beam passes through the optical domain equalization system, an order of magnitude of a bit error rate (bit error rate, BER) of the incident light beam changes from $10^{-2}$ to $10^{-5}$. This indicates that dispersion of the incident light beam is effectively compensated after the incident light beam passes through the optical domain equalization system, so that a signal impairment (an increase of the bit error rate) caused by the dispersion is suppressed.

In addition, c in FIG. 8 is a comparison diagram of amplitude-frequency response curves of light beams in two cases corresponding to a in FIG. 8 and b in FIG. 8. A curve c1 is the amplitude-frequency response curve of the light beam in a in FIG. 8, and the curve c1 shows that an attenuation of a dispersion amplitude-frequency response is the largest at approximately 27 GHz. A curve c2 is the amplitude-frequency response curve of the light beam in b in FIG. 8, and the curve c2 shows that an attenuation of a dispersion amplitude-frequency response is the largest at approximately 40 GHz. In view of this, it can be learned that, after the incident light beam passes through the optical domain equalization system, a point with the largest attenuation in a dispersion amplitude-frequency response is changed from 27 GHz to 40 GHz through compensation; in this case, dispersion is effectively compensated.

a in FIG. 9 is a level diagram of a light beam that is modulated by the communication device when no optical domain equalization system is disposed at the optical transmit end of the communication device. b in FIG. 9 is a level diagram of a light beam that is obtained through orthogonal beam combining performed by the multiplexer on a light beam modulated by the communication device, when the optical domain equalization system is disposed at the optical transmit end of the communication device. It can be learned through comparison between a in FIG. 9 and b in FIG. 9 that, after the light beam that is modulated by the communication device passes through the optical domain equalization system, an order of magnitude of a BER of the light beam changes from $10^{-2}$ to $10^{-5}$. This indicates that dispersion of the light beam is effectively compensated after the light beam passes through the optical domain equalization system, so that a signal impairment (an increase of the bit error rate) caused by the dispersion is suppressed.

In addition, c in FIG. 9 is a comparison diagram of amplitude-frequency response curves of light beams in two cases corresponding to a in FIG. 9 and b in FIG. 9. A curve c3 is the amplitude-frequency response curve of the light beam in a in FIG. 9, and the curve c3 shows that an attenuation of a dispersion amplitude-frequency response is the largest at approximately 27 GHz. A curve c4 is the amplitude-frequency response curve of the light beam in b in FIG. 9, and the curve c4 shows that an attenuation of a dispersion amplitude-frequency response is the largest at approximately 40 GHz. In view of this, it can be learned that, after the incident light beam passes through the optical domain equalization system, a point with the largest attenuation in a dispersion amplitude-frequency response is changed from 27 GHz to 40 GHz through compensation; in this case, dispersion is effectively compensated.

In conclusion, it can be understood that, regardless of whether the optical domain equalization system is disposed at the optical receive port or the optical transmit port of the communication device, a purpose of compensating for the light beam dispersion can be achieved, to suppress pulse broadening and reduce a bit error rate. In addition, the structure of the communication device provided in this embodiment of this application for implementing dispersion compensation is simple in design, and costs of components used to implement dispersion compensation are low. This helps reduce costs of the communication device.

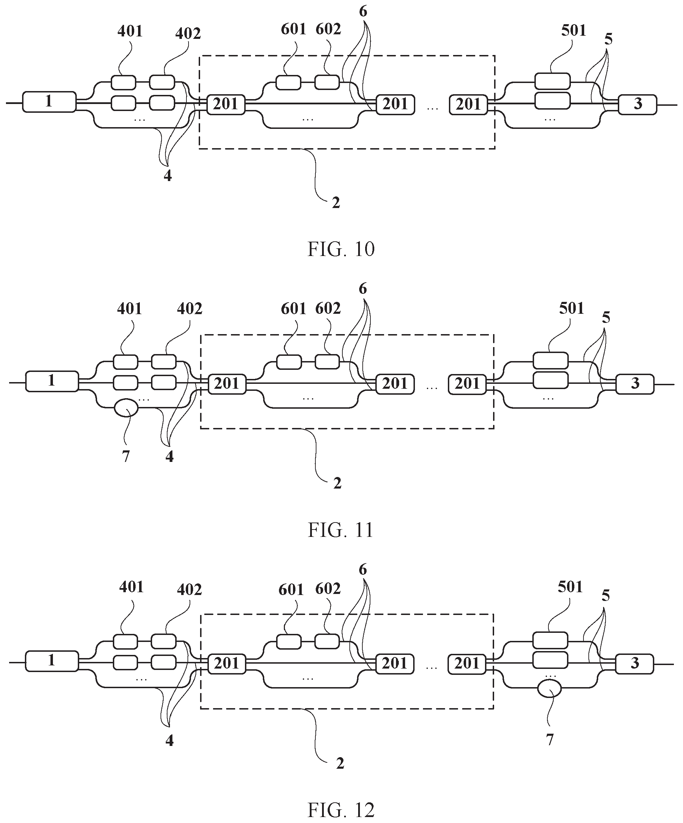

Based on the foregoing descriptions of a design principle of performing dispersion compensation on a light beam by the communication device provided in this application, the communication device may be further specifically designed based on a specific application scenario. For example, FIG. 10 is a brief diagram of another structure of a communication device according to an embodiment of this application. In the communication device, a power divider 1 may be caused, based on a use requirement of a specific scenario, to divide a light beam into at least two split light beams based on a specified power division ratio, and the power divider 1 may be connected to a coupler group 2 via at least two first paths 4, so that the at least two split light beams may enter the at least two first paths 4 in one-to-one correspondence.

It may be understood that, to cause a phase difference and a time difference to exist in transmission of any two split light beams in corresponding first paths 4, a phase shifter and a time delay unit may be disposed on a part or all of the first paths 4. In a possible embodiment, the power divider 1 may be connected to the coupler group 2 via N first paths 4, and the power divider 1 divides the light beam into N split light beams based on the specified power division ratio, so that the N split light beams enter the N first paths 4 in one-to-one correspondence, where N is an integer greater than or equal to 2. Based on this, each first path 4 in at least N-1 first paths 4 may be caused to include a phase shifter and a time delay unit that are connected in series. In other words, a phase shifter and a time delay unit may not be disposed on one first path 4 in the at least two first paths 4 connecting the power divider 1 and the coupler group 2. In this way, the phase shifter and the time delay unit in each of the at least N-1 first paths 4 may be adjusted, to adjust phase shifts and delays of any two split light beams during transmission via the corresponding first paths 4.

Still refer to FIG. 10. The coupler group 2 may be connected to a multiplexer 3 via at least two second paths 5, and the coupler group 2 performs coupling interference on the at least two split light beams and outputs at least two coupled split light beams, where the at least two coupled split light beams may enter the at least two second paths 5 in one-to-one correspondence.

To cause a time difference to exist in transmission of any two coupled split light beams in corresponding second paths 5, a time delay unit may be disposed on a part or all of the second paths 5. In a possible embodiment, the multiplexer 3 is connected to the coupler group 2 via M second paths 5. The coupler group 2 performs coupling interference on the at least two split light beams and outputs M coupled split light beams, and the M coupled split light beams enter the M second paths 5 in one-to-one correspondence, where M is an integer greater than or equal to 2. Based on this, each second path 5 in at least M-1 second paths 5 may be caused to include a time delay unit. In other words, a time delay unit may not be disposed on one second path 5 in the at least two second paths 5 connecting the coupler group 2 and the multiplexer 3. In this way, the time delay unit in each of the at least M-1 second paths 5 may be adjusted, to adjust delays of any two coupled split light beams during transmission via the corresponding second paths 5.

In the communication device shown in FIG. 3, the coupler group 2 may include only one coupler. In addition, in the communication device shown in FIG. 10, the coupler group 2 may include at least two couplers 201 that are sequentially connected via third paths 6, and two adjacent couplers 201 in the at least two couplers 201 are connected via at least two third paths 6. In this case, at least two intermediate coupled split light beams output by a former coupler 201 of the two adjacent couplers 201 may enter the at least two third paths 6 in one-to-one correspondence. In this way, a coupler 201 that is adjacent to the power divider 1 and that is in the coupler group 2 may perform coupling interference on the at least two split light beams for the first time and output at least two intermediate coupled split light beams. The at least two intermediate coupled split light beams may enter the at least two third paths 6 in one-to-one correspondence, and then enter a next coupler 201 for coupling interference, to output at least two intermediate coupled split light beams. This process continues in the same manner until a last coupler 201 outputs at least two coupled split light beams. In this case, the at least two coupled split light beams output by the last coupler 201 may enter the at least two second paths 5 in one-to-one correspondence.

In this application, in the two couplers 201 that are connected via the at least two third paths 6, a phase difference and a time difference exist in transmission, via corresponding third paths 6, of any two intermediate coupled split light beams in the at least two intermediate coupled split light beams output by the former coupler 201. In this case, a phase shifter and a time delay unit may be disposed on a part or all of the at least two third paths 6 connecting the two couplers 201. In a possible embodiment, the two adjacent couplers 201 in the at least two couplers 201 that are in the coupler group 2 and that are sequentially connected via the third paths 6 may be connected via X third paths 6, where X is an integer greater than or equal to 2. Based on this, each third path 6 in at least X-1 third paths 6 may be caused to include a phase shifter and a time delay unit. In other words, a phase shifter and a time delay unit may not be disposed on one third path 6 in the at least two third paths 6 connecting the two adjacent couplers 201. In this way, the phase shifter and the time delay unit in each of the at least X-1 third paths 6 may be adjusted, to adjust phase shifts and delays of any two intermediate coupled split light beams during transmission via the corresponding third paths 6.

In this embodiment of this application, specific types of the phase shifter and the time delay unit disposed on the third path 6 are not limited. For example, a phase shifter 601 on one third path 6 shown in FIG. 10 may be a thermal phase shifter, an electrical phase shifter, or the like. In addition, a time delay unit 602 disposed on the third path 6 may also be, for example, the spiral waveguide shown in FIG. 4, or may be an optical fiber, provided that effect of increasing transmission time of a light beam from a former coupler 201 to a latter coupler 201 can be achieved. The phase shifter and the time delay unit on each third path 6 may be the same or may be different. This is not limited in this application.

In addition, the coupler 201 in the coupler group 2 may be, but is not limited to, a multimode interferometer coupler, a directional coupler, or the like, and types of the couplers 201 may be the same or may be different.

In the communication device provided in this embodiment of this application, a quantity N of the first paths 4 connecting the power divider 1 and the coupler group 2, a quantity M of the second paths 5 connecting the coupler group 2 and the multiplexer 3, and a quantity X of the third paths 6 connecting the two adjacent couplers 201 in the coupler group 2 may be equal or may not be equal. For example, when N is 10, M may be 11, 10, or 8, and X may be 12, 10, or 9. In addition, when the coupler group 2 includes three or more couplers 201 that are sequentially connected via third paths 6, quantities of third paths 6 between any two adjacent couplers 201 may be equal or may not be equal. This is not limited in this application.

It is to be noted that, in this embodiment of this application, that the power divider 1, the coupler group 2, and the multiplexer 3 are sequentially connected is merely a limitation on a connection sequence of the power divider 1, the coupler group 2, and the multiplexer 3, to describe a transmission direction of a light beam in the communication device. When the power divider 1 is specifically connected to the coupler group 2, and the coupler group 2 is specifically connected to the multiplexer 3, the power divider 1 may be directly or indirectly connected to the coupler group 2 via the at least two first paths 4, and the multiplexer 3 may be directly or indirectly connected to the coupler group 2 via the at least two second paths 5. Specifically, for example, in the communication devices shown in FIG. 3 and FIG. 10, on paths connecting the power divider 1 and the coupler group 2, only the at least two first paths 4 may be disposed between the power divider 1 and the coupler group 2, so that the power divider 1 is directly connected to the coupler group 2 via the at least two first paths 4. Alternatively, in the communication device shown in FIG. 11, in addition to the at least two first paths 4, another optical transmission system 7 may be disposed between the power divider 1 and the coupler group 2. The optical transmission system 7 may be disposed at any position between the power divider 1 and the coupler group 2. For example, in the communication device shown in FIG. 11, the optical transmission system 7 may be connected in series with any first path 4. In this way, the power divider 1 is indirectly connected to the coupler group 2.

Similarly, on paths connecting the coupler group 2 and the multiplexer 3, only the at least two second paths 5 may be disposed between the coupler group 2 and the multiplexer 3, so that the coupler group 2 is directly connected to the multiplexer 3 via the at least two second paths 5. Alternatively, in addition to the at least two second paths 5, another optical transmission system 7 may be disposed between the coupler group 2 and the multiplexer 3. The optical transmission system 7 may be disposed at any location between the coupler group 2 and the multiplexer 3. For example, in a communication device shown in FIG. 12, the optical transmission system 7 may be connected in series with any second path 5, so that the coupler group 2 is indirectly connected to the multiplexer 3.

In some other possible embodiments, optical transmission systems 7 may be disposed between the power divider 1 and the coupler group 2 and between the coupler group 2 and the multiplexer 3. A quantity of optical transmission systems 7 between the power divider 1 and the coupler group 2 and a quantity of optical transmission systems 7 between the coupler group 2 and the multiplexer 3 are not limited in this application. In addition, in this embodiment of this application, a specific structure of the optical transmission system 7 is not limited. For example, the optical transmission system 7 may include at least one optical transmission medium, or may include an optical component connected via at least one optical transmission medium. For example, the optical transmission system 7 may be connected to an optical domain equalization system via a coupler or another possible optical component. This is not limited in this application.

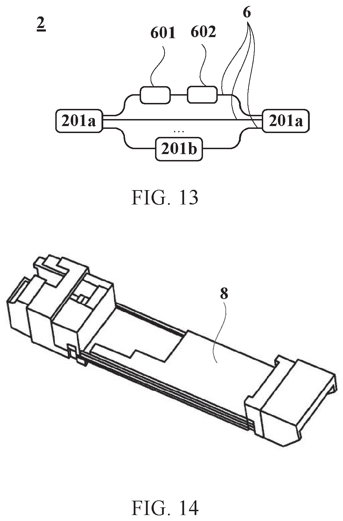

In addition, the coupler group 2 may further include a coupler that accesses the optical domain equalization system of the communication device via another path. The coupler may be configured to connect another optical transmission system to the optical domain equalization system of the communication device. In this application, types of couplers in the coupler group 2 may be the same, or may be different. To facilitate differentiation between couplers that are in the coupler group 2 and that are configured to implement different functions, in the coupler group 2 shown in FIG. 13, a coupler that is connected via a third path 6 is defined as a coupler 201a, and a coupler that is configured to connect another optical signal transmission system to the optical domain equalization system of the communication device is defined as a coupler 201b. An arrangement order of the coupler 201a and the coupler 201b in the coupler group 2 is not limited in this application. For example, the coupler 201b may be disposed at any location between two adjacent couplers 201a. For example, the coupler 201b in the coupler group 2 shown in FIG. 13 may be connected in series with any third path 6, to implement indirect connection between the two couplers 201a. Alternatively, if two adjacent couplers 201a are directly connected via at least two third paths 6, the coupler 201b may be disposed on a side that is of the two directly connected couplers 201a and that is used to connect to the power divider 1, or the coupler 201b may be disposed on a side that is of the two directly connected couplers 201a and that is used to connect to the multiplexer 3. In addition, the coupler 201b may be alternatively disposed at any other position. These are not listed one by one herein.

The foregoing describes only some examples of specific disposition manners of the communication device provided in this application. Based on a principle and a specific application scenario of dispersion compensation performed by the communication device on a light beam, other possible variations may be made to the communication device. The variations are not described herein one by one, but need to be understood as falling within the protection scope of this application.

It is to be noted that, in this application, a specific setting type of the communication device is not limited, and the communication device may be an optical communication transceiver for light beam receiving and transmission. For example, the communication device may be an optical module shown in FIG. 14. The optical module includes a housing 8, and the optical domain equalization system may be disposed in the housing 8 of the optical module. In addition, the communication device may alternatively be set as an optical communication transceiver in another possible form. Forms are not listed one by one herein.

In addition, a processing manner of the communication device is not limited in this application. For example, a power divider, a coupler group, a multiplexer, a first path, a second path, a third path, and the like of the communication device may be obtained through processing via, but not limited to, a silicon photonics process platform, a programmable logic controller (programmable logic controller, PLC) process platform, or a silicon nitride process platform, and processing manners of the components may be the same or may be different.

When the communication device provided in this embodiment of this application is set to be in a form of a communication transceiver, the communication device may be used in the base station shown in FIG. 2. The BBU 03 and the RRU 02 of the base station may implement signal connection via a communication device 06. During specific implementation, the BBU 03 may be connected to the communication device 06 via the optical transmission medium 05 like the optical fiber or the waveguide, and the RRU 02 may be connected to the communication device 06 via the optical transmission medium 05 like the optical fiber or the waveguide, so that an optical signal sent by the BBU 03 may be transmitted to the RRU 02 after passing through the communication device 06. In addition, an optical signal sent by the RRU 02 may also be transmitted to the BBU 03 after passing through the communication device 06. Because the communication device 06 provided in this embodiment of this application can perform dispersion compensation for light beam during transmission, the BBU 03 has a signal connection to the RRU 02 via the communication device 06, and the communication device 06 can effectively compensate for dispersion of a light beam in which transmission is performed between the BBU 03 and the RRU 02, to suppress pulse broadening of the light beam, reduce a bit error rate of the optical signal, and reduce a power loss of the optical signal in which transmission is performed between the BBU 03 and the RRU 02.

In addition, the BBU 03 and the AAU 04 may also implement signal connection via the communication device 06. During specific implementation, the BBU 03 is connected to the communication device 06 via the optical transmission medium 05 like the optical fiber or the waveguide, and the AAU 04 is also connected to the communication device 06 via the optical transmission medium 05 like the optical fiber or the waveguide, so that an optical signal sent by the BBU 03 may be transmitted to the AAU 04 after passing through the communication device 06, or an optical signal sent by the AAU 04 may be transmitted to the BBU 03 after passing through the communication device 06. In this way, dispersion of a light beam in which transmission is performed between the BBU 03 and the AAU 04 can be effectively compensated, to suppress pulse broadening of the light beam, reduce a bit error rate of the optical signal, and reduce a power loss of the optical signal in which transmission is performed between the BBU 03 and the AAU 04.

In addition to the foregoing optical communication transceiver, the communication device provided in this embodiment of this application may also be set as a base station. In this case, the communication device may further include at least two optical communication units that are signal-connected. Any two optical communication units may be signal-connected via the foregoing optical domain equalization system, to implement dispersion compensation for a light beam in which transmission is performed between the two optical communication units, to suppress pulse broadening of the light beam, reduce a bit error rate of an optical signal, and reduce a power loss of an optical signal in which transmission is performed between two optical communication units.

When the base station in which the communication device provided in the foregoing embodiment of this application is used is used in the communication system shown in FIG. 1, a bit error rate of a communication signal between the base station and a terminal device can be effectively reduced, a signal retransmission probability can be reduced, and a signal transmission delay can be reduced.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication device, comprising a power divider, a coupler group, and a multiplexer that are sequentially connected, wherein

    the power divider is connected to the coupler group via at least two first paths;
    the power divider is configured to divide a light beam into at least two split light beams, wherein the at least two split light beams enter the at least two first paths in one-to-one correspondence, and a phase difference and a time difference exist in transmission of any two split light beams in corresponding first paths;
    the coupler group is configured to: perform coupling interference on the at least two split light beams, and output at least two coupled split light beams;
    the multiplexer is connected to the coupler group via at least two second paths, the at least two coupled split light beams enter the at least two second paths in one-to-one correspondence, and a time difference exists in transmission of any two coupled split light beams in corresponding second paths; and
    the multiplexer is configured to perform orthogonal beam combining on the at least two coupled split light beams.

2.  The communication device according to claim 1, wherein the power divider is connected to the coupler group via N first paths, and each first path in at least N-1 first paths comprises a phase shifter and a time delay unit that are connected in series, wherein N is an integer greater than or equal to 2.

3.  The communication device according to claim 2, wherein the time delay unit of each first path is a spiral waveguide or an optical fiber of a specified length, and the phase shifter of each first path is a thermal phase shifter or an electrical phase shifter.

4.  The communication device according to any one of claims 1 to 3, wherein the multiplexer is connected to the coupler group via M second paths, and each second path in at least M-1 second paths comprises a time delay unit, wherein M is an integer greater than or equal to 2.

5.  The communication device according to claim 4, wherein the time delay unit of each second path is a spiral waveguide or an optical fiber of a specified length.

6.  The communication device according to any one of claims 1 to 5, wherein the coupler group comprises at least two couplers that are sequentially connected via a third path, two adjacent couplers in the at least two couplers are connected via at least two third paths, at least two intermediate coupled split light beams output by a former coupler of the two adjacent couplers in the at least two couplers enter the at least two third paths in one-to-one correspondence, and a phase difference and a time difference exist in transmission of any two intermediate coupled split light beams in corresponding third paths.

7.  The communication device according to claim 6, wherein the two adjacent couplers in the at least two couplers are connected via X third paths, and each third path in at least X-1 third paths comprises a phase shifter and a time delay unit that are connected in series, wherein X is an integer greater than or equal to 2.

8.  The communication device according to any one of claims 1 to 7, wherein the multiplexer is a mode multiplexer or a polarization multiplexer.

9.  The communication device according to any one of claims 1 to 8, wherein the coupler is a multimode interferometer coupler or a directional coupler.

**10.** The communication device according to any one of claims 1 to 9, wherein the communication device further comprises a detector, the detector is configured to receive a light beam obtained through orthogonal beam combining performed by the multiplexer, and the detector is configured to restore a signal that is modulated onto the light beam.

**11.** The communication device according to any one of claims 1 to 10, wherein the communication device further comprises an optical transmit port, and the optical transmit port is configured to transmit, to outside of the communication device, the light beam obtained through orthogonal beam combining performed by the multiplexer.

**12.** The communication device according to any one of claims 1 to 11, wherein the communication device further comprises at least one optical transmission system, each optical transmission system comprises at least one optical transmission medium, and the at least one optical transmission system is connected in series between the power divider and the coupler group, or the at least one optical transmission system is connected in series between the coupler group and the multiplexer.

**13.** The communication device according to any one of claims 1 to 11, wherein the communication device further comprises at least two optical transmission systems, each optical transmission system comprises at least one optical transmission medium, at least one optical transmission system is connected in series between the power divider and the coupler group, and at least one optical transmission system is connected in series between the coupler group and the multiplexer.

**14.** A base station, comprising a baseband unit, a remote radio unit, and the communication device according to any one of claims 1 to 13, wherein the baseband unit has a signal connection to the remote radio unit via the communication device.

**15.** The base station according to claim 14, wherein the base station further comprises an active antenna unit, and the baseband unit has a signal connection to the active antenna unit via the communication device.

**16.** A communication system, comprising the base station according to claim 14 or 15, wherein the base station is configured to communicatively connected to a terminal device.

FIG. 1

FIG. 2

FIG. 3

FIG. 4

FIG. 5a

FIG. 5b

FIG. 6a

FIG. 6b

FIG. 7a

FIG. 7b

FIG. 8

FIG. 9

EP 4 761 142 A1

FIG. 10

FIG. 11

FIG. 12

FIG. 13

FIG. 14

## INTERNATIONAL SEARCH REPORT

| International application No. |
|---|
| **PCT/CN2024/111160** |

| A. | CLASSIFICATION OF SUBJECT MATTER |
|---|---|

H04B 10/2525(2013.01)i

According to International Patent Classification (IPC) or to both national classification and IPC

| B. | FIELDS SEARCHED |
|---|---|

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT, WPABS, ENTXT, ENTXTC, VEN: 功率, 分配, 耦合, 复用, 分光, 光纤, 光线, 相位, 时间, 差, 时延, 延迟, 色散, 补偿, 移相器, power, distribut+, coupl+, multiplexing, split+, fiber, optical, phase, time, difference, delay, dispersion, compensation, phase shifter

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113188647 A (WUHAN UNIVERSITY OF TECHNOLOGY) 30 July 2021 (2021-07-30) description, paragraphs 23-61, and figure 1 | 1-16 |
| A | CN 107171736 A (HANGZHOU DIANZI UNIVERSITY) 15 September 2017 (2017-09-15) entire document | 1-16 |
| A | CN 113949455 A (ACCELINK TECHNOLOGIES CO., LTD.) 18 January 2022 (2022-01-18) entire document | 1-16 |
| A | US 2020280369 A1 (MOLEX, LLC) 03 September 2020 (2020-09-03) entire document | 1-16 |
| A | WO 2013109987 A2 (THE BOARD OF TRUSTEES OF THE LELAND STANFORD JUNIOR UNIVERSITY) 25 July 2013 (2013-07-25) entire document | 1-16 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 November 2024** | **12 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111160**

| Patent document cited in search report | | | Publication date (day/month/year) | Patent family member(s) | | | Publication date (day/month/year) |
|---|---|---|---|---|---|---|---|
| CN | 113188647 | A | 30 July 2021 | US | 2022326068 | A1 | 13 October 2022 |
| | | | | WO | 2022217843 | A1 | 20 October 2022 |
| CN | 107171736 | A | 15 September 2017 | | None | | |
| CN | 113949455 | A | 18 January 2022 | | None | | |
| US | 2020280369 | A1 | 03 September 2020 | | None | | |
| WO | 2013109987 | A2 | 25 July 2013 | EP | 2805140 | A2 | 26 November 2014 |
| | | | | JP | 2016166898 | A | 15 September 2016 |
| | | | | JP | 2015505611 | A | 23 February 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311178022

- CN FILEDWITHTHECHINANATIONALINTELLEC-TUALPROPERTYADMINISTRATIONON